# EUROPÄISCHE PATENTSCHRIFT

(11) **EP 0 883 564 B1**
(45) Veröffentlichungstag und Bekanntmachung des Hinweises auf die Patenterteilung: **03.05.2000**
(21) Anmeldenummer: 97903265.3
(22) Anmeldetag: 13.02.1997
(51) Int. Cl.: B65H 37/00, B65H 75/30, B65H 35/07

(54) **RUTSCHKUPPLUNG ZUR DREHMOMENTBEGRENZENDEN KRAFTÜBERTRAGUNG ZWISCHEN EINEM SPULENKERN EINER SPULE ZUM AUF- ODER ABWICKELN EINES BANDES UND EINER DREHAUFNAHME**
FRICTION COUPLING FOR THE TORQUE-LIMITING TRANSMISSION OF FORCE BETWEEN A COIL CORE FOR WINDING OR UNWINDING A TAPE AND A ROTARY SUPPORT
ACCOUPLEMENT A FRICTION POUR ASSURER UN TRANSFERT DE FORCE, LIMITANT LE MOMENT DE ROTATION, ENTRE UN NOYAU D'UNE BOBINE D'ENROULEMENT OU DE DEROULEMENT D'UNE BANDE ET UN SUPPORT ROTATIF

(30) Priorität: 22.02.1996 DE 19606626
(43) Veröffentlichungstag der Anmeldung: 16.12.1998
(73) Patentinhaber: Pritt Produktionsgesellschaft mbH, 30453 Hannover (DE)
(72) Erfinder: MANUSCH, Christoph, D-40966 Hemmingen (DE); HERRMANNSEN, Wulf, D-30952 Ronnenberg (DE); BALKE, Olaf, D-31515 Wunstorf (DE)
(74) Vertreter: Hase, Christian, Dr.
(86) Internationale Anmeldenummer: EP9700653
(87) Internationale Veröffentlichungsnummer: WO9730922

(56) Entgegenhaltungen:
- DE-A- 3 911 402
- DE-C- 2 811 842
- US-A- 4 851 076

## Beschreibung

Die Erfindung bezieht sich auf eine Rutschkupplung zur drehmomentbegrenzenden Kraftübertragung zwischen einem Spulenkern einer Spule zum Auf- oder Abwickeln eines Bandes und einer Drehaufnahme für diesen Spulenkern, mit einem im Querschnitt ringförmigen ersten Kupplungsteil und einem als Formelement ausgebildeten zweiten Kupplungsteil, wobei das ringförmige Kupplungsteil an mehreren über seinen Umfang verteilt liegenden, voneinander beabstandeten Anlagestellen mit zugeordneten, am Formelement ausgebildeten Kontaktflächenbereichen in reibschlüssigem Eingriff steht, und wobei eines der beiden Kupplungsteile mit dem Spulenkern der Spule verbunden ist, während das andere Bestandteil der Drehaufnahme ist.

Solche Rutschkupplungen werden in großem Umfang insbesondere bei Geräten für den Haushalt- und Bürobereich eingesetzt, z.B. für Klebebandspender oder für Transferdispenser. Unter "Transferdispenser" werden Handgeräte zum Übertragen eines Films, z.B. eines Klebstoff-Films oder eines Cover-Up-Films, von einem Trägerband auf eine Unterlage verstanden, wobei das Trägerband innerhalb des Gerätes auf einer Vorratsspule aufgewickelt ist, von dieser aus zu einem aus dem Gerät vorragenden Auftragfuß geführt, um diesen umgelenkt und wieder in das Gerät zu einer Aufwickelspule zurückgeleitet wird. Über den Auftragfuß kann das filmbeschichtete Trägerband gegen ein Substrat angedrückt werden, wodurch in Verbindung mit der Umlenkung des Bandes die Filmschicht vom Trägerband abgelöst und auf das Substrat übertragen wird, während das leere Trägerband dann auf die Aufwickelspule in das Gehäuse zurückgeführt wird. Dabei sind Vorratsspule und Aufwickelspule sowie der Auftragfuß oftmals in einer Kassette zusammengefaßt. Vorratsspule und Aufwickelspule können koaxial oder achsparallel zueinander in dem Gehäuse des Gerätes angeordnet sein.

Die genannten Rutschkupplungen werden nun entweder bei Transferdispensern dafür eingesetzt, von der Vorratsspule aus, die durch den Bandabzug in Antrieb versetzt wird, unter Zwischenschaltung der Rutschkupplung die Aufwickelspule anzutreiben, wobei die Rutschkupplung den für den Aufbau der stets geforderten Bandspannung nötigen Drehzahlausgleich zwischen der Vorratsspule und der Aufwickelspule ausgleicht. Die Rutschkupplungen können aber auch dafür eingesetzt werden, bei Geräten, bei denen im Gehäuse nur eine (nämlich die Vorratsspule) frei drehbar vorgesehen ist, wobei der Benutzer das Band (z.B. ein Klebeband) je nach Wunsch zur Entnahme abwickeln kann, die frei drehende Spule mit einem gewünschten Bremsmoment zu versehen, um z.B. beim Abzug des Bandes eine gewissen Bandspannung aufrechtzuerhalten (etwa bei der Abgabe des Bandes zum Verkleben einer Verpackung) oder auch um zu verhindern, daß bei einem etwas stärkeren Zug des Benutzers die Vorratsspule zu schnell abläuft bzw. am Ende der Entnahme unerwünscht überdreht.

Bei bekannten Geräten werden solche Rutschkupplungen in unterschiedlicher Weise realisiert. Bei dem aus der DE-A-30 34 145 bekannten Gerät sind die Vorrats- und die Aufwickelspule über einen Flachriementrieb miteinander verbunden, der über Riemenscheiben läuft und rein reibschlüssig wirkt. Die Vorspannung des Riementriebs ist auf das gewünschte Rutschdrehmoment abgestimmt, wobei der Schlupf dann eintritt, wenn die für die gewünschte Trägerbandspannung maßgebliche Bremskraft an der Aufwickelspule erreicht ist.

Aus der DE-A-39 00 153 ist eine Rutschkupplung bekannt, die auf der Basis einer Magnetkupplung arbeitet und bei der antriebsseitig eine Magnetscheibe und abtriebsseitig eine Stahlscheibe eingesetzt sind. Aus der zwischen der Magnetscheibe und der Stahlscheibe auftretenden Anziehungskraft und der daraus resultierenden Reibung bestimmt sich das Schlupf-Drehmoment.

Nach der EP-A-0 556 406 sitzt die Aufwickelspule mit Preßsitz unter Zwischenschaltung einer Reibhülse auf einer über eine Verzahnung direkt von der Vorratsspule aus angetriebenen Welle. Die Andruck- bzw. Kräfteverhältnisse sind dabei so gewählt, daß bei Erreichen der gewünschten Bandspannung bzw. bei Auftreten des entsprechenden Bremsmomentes an der Aufwickelspule Schlupf eintritt.

Aus der US-A-4 891 090 ist als weitere Möglichkeit die Ausbildung einer Rutschkupplung der eingangs genannten Art bekannt, bei der ein als Formelement ausgebildeter Kupplungsteil mit mehreren sternförmig angeordneten, federnden Kunststoffarmen versehen ist, die gegen die Innenwand eines ringhülsenförmigen anderen Kupplungsteiles andrücken und mit dieser in reibschlüssigem Eingriff stehen. Die Andruckkraft der Arme und die Reibpaarung aus deren Material und dem der Ringhülse bestimmen das übertragbare Drehmoment bzw. das Rutschmoment.

Alle genannten Rutschkupplungen sind im Prinzip als Reibungskupplungen ausgebildet, wodurch die Größe des Rutschmomentes stets von dem aktuell auftretenden Reibungswiderstand zwischen den aneinander reibenden Teilen festgelegt wird. Gerade bei Transferdispensern muß der Bandwiderstand, bei dem Schlupf auftritt, zumindest geringfügig größer sein als die Kraft, die erforderlich ist, um das Trägerband unter der gewünschten Spannung über das Auftragelement zu führen, die aufgebrachte Klebstoffschicht zu lösen und das Trägerband auf die Aufwickelspule umzuspulen. Andererseits darf aber wiederum das Drehmoment, bei dem Schlupf auftritt, die Kohäsionskraft der auf dem Trägerband aufgebrachten Beschichtung (z.B. Klebstoffschicht) nicht überschreiten, da dies zum Abreißen des Filmes führen würde, der Band-transport zum Stillstand käme und letztlich eine Schwergängigkeit die Folge wäre. Zudem wird der an der Aufwickelspule wirksame Hebelarm mit zunehmendem Aufwickelradius größer, was dazu führt, daß der Schlupf der Kupplung so ausgelegt werden muß, daß auch noch der letzte Abschnitt des auf die Aufwickelspule aufzuwickelnden Trägerbandes noch sicher aufgewickelt werden kann.

Bei den bekannten Rutschkupplungen ist die wesentliche Einflußgröße die Reibkraft zwischen den aufeinander reibenden Werkstücken. Sie ist in hohem Maß abhängig z.B. vom Abriebsverhalten oder Andruckverhalten der aufeinander gleitenden Teile. Wenn im Verlauf der Benutzung eines Gerätes ein auch nur geringer Abrieb auftritt, führt dies bei nicht federnd vorgespannten Teilen bereits dazu, daß in der Reibfläche die Andruckkraft stark absinkt, mit der Folge, daß auch die Reibkraft und damit das Schlupfmoment deutlich fallen. Werden zum Andruck der aneinander reibenden Teile jedoch federnde, z.B. elastisch verformte, Teile eingesetzt, wie dies bei dem gattungsgemäßen Gerät aus der US-A-4 891 090 der Fall ist, führt dies aufgrund des viskoelastischen Verhaltens solcher Kunststoffe, die für die federnden Teile eingesetzt werden, dazu, daß im Lauf der Benutzungszeit die federnde Vorspannung in einem gewissen Maße nachgibt. Die Belastung ständig federnd verformter Kunststoff-Federn darf dabei nur vergleichsweise klein sein, um zu verhindern, daß sie im Lauf der Zeit bleibend zu stark verformt werden. Dies bedeutet aber für die gattungsgemäße Rutschkupplung, daß sie nur für eine begrenzte Zeit imstande ist, das Drehmoment, für das sie ausgelegt wurde und das für den störungsfreien Betrieb eines Transferdispensers o.ä. gewünscht wird, zu übertragen. Dies in Verbindung mit dem mit zunehmendem Wickelradius an der Aufwickelspule ebenfalls anwachsenden Bremsmoment derselben führt dazu, daß, um das Aufwickeln bis zum Schluß eines Bandes sicherzustellen, am Anfang der Band-Lebensdauer ein vergleichsweise großes Schlupfmoment berücksichtigt werden muß, damit auch noch ein ausreichender Zug bei fast gänzlich gefüllter Aufwickelspule am Ende der Einsatzdauer des Bandes gewährleistet wird. Zudem ist auch die Montage solcher Rutschkupplungen mit federnd vorgespannten Einzelfingern vergleichsweise aufwendig.

Ausgehend hiervon stellt die Erfindung darauf ab, eine gattungsgemäße Rutschkupplung so weiterzuentwickeln, daß sie bei einfacher Montagemöglichkeit und unkompliziertem Aufbau einen auch über längere Einsatzdauer hinweg vergleichsweise wenig ändernden Wert für das übertragbare Maximaldrehmoment (Schlupfdrehmoment) aufweist.

Erfindungsgemäß wird dies bei einer Rutschkupplung der eingangs genannten Art dadurch erreicht, daß das Formelement als starr-formstabiler Formkörper ausgebildet ist, während das ringförmige erste Kupplungsteil aus einem biegsamen Material besteht, und daß das Formelement bei Auftreten einer Relativbewegung zwischen beiden Kupplungsteilen das ringförmige Kupplungsteil über die Anlagstellen umlaufend verformt.

Während bei den Rutschkupplungen nach dem Stand der Technik das auftretende Rutschmoment ausschließlich von der in der Gleitfläche der aufeinander gleitenden Kupplungsteile auftretenden adhäsiven Reibkraft bestimmt wird, wird seine Größe bei der erfindungsgemäßen Rutschkupplung maßgeblich durch die ständig zu leistende mechanische Arbeit infolge des fortwährend auftretenden energieverzehrenden Verformungsvorgangs bestimmt, wobei die gleichzeitig auch noch zwischen den zueinander bewegten Teilen auftretenden Reibkräfte einen vergleichsweise nur geringen Anteil beitragen. Dabei kommt es nicht zu einer so raschen Ermüdung, wie sie bei den ständig belasteten Kunststoffedern der gattungsgemäßen Rutschkupplung auftritt, weil das vom Formelement laufend verformte Gegenelement (ringförmiges erstes Kupplungsteil) ständig örtlich be- und entlastet und sogar in Gegenrichtung deformiert bzw. belastet wird (nämlich in dem Bereich zwischen zwei Verformungsstellen), was eine völlig andere Belastungssituation als bei laufend nur in einer Richtung vorgespannten Kunststoffedern ergibt. Da bei der erfindungsgemäßen Rutschkupplung an jeder Stelle des ringförmigen Kupplungsteiles bei einer Relativbewegung zum Formelement sich laufend ändernde Deformationen einstellen, die - anders als bei der gattungsgemäßen Rutschkupplung - keinen Beharrungszustand ergeben, wird hierdurch nicht nur die Lebensdauer, sondern auch die Funktionsfähigkeit der erfindungsgemäßen Rutschkupplung erheblich erhöht. Dies ermöglicht es, bei Transferdispensern mit Wechselkassette das bei Betrieb ständig verformte Kupplungsteil in der Kassette anzuordnen und gleichzeitig nur die nicht deformierten Teile, bei denen überhaupt keine oder so gut wie keine Ermüdung eintritt, gehäusefest anzuordnen, so daß bei einem Kassettenwechsel die durch Deformation beanspruchten Teile stets mit ausgewechselt werden und beim Einlegen einer neuen Kassette auch in neuer Form vorliegen. Bei der erfindungsgemäßen Rutschkupplung läßt sich damit über eine erheblich längere Zeitdauer als bei der gattungsgemäßen Rutschkupplung eine deutlich verbesserte, volle Funktionsfähigkeit erreichen, was auch besonders wichtig für Geräte mit Wechselkassetten ist. Aber auch falls keine Wechselkassetten eingesetzt werden oder wenn es sich um ein Gerät handelt, bei dem nur ein laufendes Bremsmoment auf aufgesteckte Spulen (wie bei einem Klebebandspender) gewünscht wird, tritt über die Einsatzdauer des Gerätes hinweg eine deutlich geringere Änderung der Größe des Rutschmomentes als bei den bekannten, rein reibschlüssig arbeitenden Geräten auf.

Bei der erfindungsgemäßen Rutschkupplungsanordnung kann die Drehaufnahme ihrerseits entweder als reine Halteachse am Gehäuse befestigt sein, wobei die Rutschkupplung dann die Aufbringung eines Bremsmomentes auf eine aufgesteckte Spule ermöglicht. Die Drehaufnahme kann ihrerseits aber auch als drehbare Welle direkt oder über ein Zwischengetriebe mit einer zweiten Spule verbunden sein, wenn in dem Gehäuse neben einer Vorrats- auch noch eine Aufwickelspule vorgesehen wird, wie dies bei Transferdispensern regelmäßig der Fall ist.

In bevorzugter Ausgestaltung der erfindungsgemäßen Rutschkupplung weist das ringförmige Kupplungsteil vor seinem Zusammenstecken mit dem Formelement einen kreisringförmigen Querschnitt auf, der nach der Montage bzw. nach dem Zusammenstecken beider Kupplungsteile vom Formelement unrund verformt wird. Bevorzugt wird dabei das ringförmige Kupplungsteil als eine zylindrische Hülse ausgebildet, was eine besonders einfache, leicht herstellbare und einfach montierbare Ausgestaltung ergibt.

In vorteilhafter Weiterbildung der Erfindung wird das Formelement koaxial innerhalb des ringförmigen Kupplungsteiles angebracht, wobei, erneut bevorzugt, das Formelement als ein im wesentlichen zylindrischer Körper ausgebildet ist, der an seinem Außenumfang mindestens zwei in seiner Axialrichtung verlaufende, leistenförmige Formvorsprünge aufweist, die gegen den Innenumfang des ringförmigen Kupplungsteiles vorspringen und mit diesem in Kontakt stehen, wobei sie gleichzeitig das ringförmige Kupplungsteil an ihren Berührstellen etwas dehnen, d.h. ihre Kontaktflächenbereiche, mit denen sie am Innenumfang des ringförmigen Kupplungsteiles anliegen, liegen auf einem Kreis mit einem Durchmesser, der um ein geeignetes Maß größer als der Innendurchmesser des ringförmigen Kupplungsteiles vor dessen Montage ist.

Eine andere vorteilhafte Weiterbildung der Erfindung besteht auch darin, daß das Formelement aus einem im Querschnitt im wesentlichen polygonförmigen Drehteil gebildet wird, dessen Ecken abgerundet sind und mit dem ringförmigen Kupplungsteil die in Anlagekontakt stehenden Kontaktflächenbereiche bilden. Auch hier liegen diese Kontaktflächenbereiche wieder auf einem Radius etwas größer als der Innenradius des ringförmigen Kupplungsteiles in dessen unmontiertem Zustand.

Das Formelement kann in einer wieder anderen, ebenfalls vorzugsweisen Ausgestaltung der erfindungsgemäßen Rutschkupplung auch aus einem drehbaren Radkranz bestehen, der Trägerarme aufweist, an deren Enden frei verdrehbare Rollen angeordnet sind, welche die mit dem ringförmigen Kupplungsteil in Anlagekontakt stehenden Kontaktflächenbereiche bilden. Bei dieser Ausgestaltung, die etwas komplizierter und aufwendiger als die anderen genannten Ausgestaltungen der Erfindung ist, läßt sich aber der große Vorteil erreichen, daß hier der Reibungseinfluß auf die Größe des Schlupfmomentes noch weiter verkleinert ist, da hier nur die Rollreibung, die sehr viel kleiner als die Gleitreibung ist, den entsprechenden Reibkraftanteil ausbildet.

Die Anlagestellen können bei der erfindungsgemäßen Rutschkupplung über den Umfang des ringförmigen Kupplungsteiles in jeder geeigneten Form verteilt angeordnet sein, werden aber besonders bevorzugt gleichmäßig über diesen Umfang verteilt angebracht.

Eine andere vorteilhafte Ausgestaltung der Erfindung besteht darin, daß das ringförmige Kupplungsteil koaxial innerhalb des Formelementes angebracht ist, wobei besonders bevorzugt das Formelement seinerseits als eine im wesentlichen zylindrische Ringhülse ausgebildet ist, die aber an ihrem Innenumfang mindestens zwei in Hülsenlängsrichtung verlaufende, leistenartige, gegen den Außenumfang des in ihrem Inneren angeordneten ringförmigen Kupplungsteiles vorspringende, mit diesem in Druckanlagekontakt stehende und an ihrem freien Ende abgerundete Formvorsprünge aufweist. In diesem Fall liegen die radial inneren Enden der Formvorsprünge auf einem Kreisradius, der um ein geeignetes Maß kleiner als der Außenradius des innenliegenden ringförmigen ersten Kupplungsteiles ist.

Ganz besonders bevorzugt wird bei der letztgenannten Ausführungsform innerhalb des ringförmigen Kupplungsteiles koaxial noch ein weiteres, zweites, starr-formstabiles Formelement angebracht, das seinerseits an mindestens zwei über seinen Umfang verteilt angeordneten Formvorsprüngen mit dem Innenumfang des ringförmigen Kupplungsteiles an Anlagestellen derart in Anlagekontakt steht, daß es bei Auftreten einer Relativbewegung zwischen ihm und dem ringförmigen Kupplungsteil letzteres über die Anlagestellen radial nach außen verformt, wobei die hier gebildeten Anlagestellen zu denen zwischen dem ringförmigen Kupplungsteil und dem anderen, ersten Formelement, das radial außerhalb des ringförmigen Kupplungsteiles liegt, jeweils in Umfangsrichtung versetzt sind, und wobei das eine Formelement mit dem Spulenkern der Spule und das andere Formelement mit dem Spulenkern einer weiteren Spule verbunden ist.

In bevorzugter Ausgestaltung der erfindungsgemäßen Rutschkupplung wird für den Fall, daß zwei Spulen vorhanden sind, das ringförmige Kupplungsteil mit dem Spulenkern der einen Spule und das Formelement mit dem Spulenkern einer anderen Spule verbunden, wobei bevorzugt zwischen dem einen oder dem anderen Kupplungsteil und dem zugeordneten Spulenkern ein Übersetzungsgetriebe zwischengeschaltet ist.

Wenn zwei Spulen vorhanden sind, von denen die eine die andere über die Rutschkupplung antreibt, wird bevorzugt das Formelement am Spulenkern der antreibenden Spule angeschlossen, etwa als ein entsprechender seitlich konzentrisch zu dieser vorragender Formteil.

Bevorzugt stellt dabei das ringförmige Kupplungsteil den Spulenkern der angetriebenen Spule selbst dar. Das ringförmige Kupplungsteil kann aber grundsätzlich an dem zugeordneten Spulenkern in der Form angeschlossen sein, daß es eine seitlich vom Spulenkern und koaxial zu diesem vorstehende Ringhülse ist.

Das bei der Relativbewegung der beiden Kupplungsteile zueinander laufend verformte ringförmige Kupplungsteil kann aus jedem hierfür geeigneten Material bestehen, soferne dieses die erforderliche Biegeverformbarkeit aufweist (während die Umfangslänge des ringförmigen Kupplungsteiles sich auch bei dessen Verformung nicht ändern soll). Bevorzugt läßt es sich aus Materialien wie Karton oder einem geeignetem biegeverformbaren Kunststoff herstellen.

Die Erfindung wird nachfolgend anhand der Zeichnung im Prinzip beispielshalber noch näher erläutert. Es zeigen:
Fig. 1 eine schematische Schrägansicht eines Transferdispensers, in dem eine erfindungsgemäße Rutschkupplung eingesetzt ist;
Fig. 2 eine auseinandergezogene perspektivische Prinzipdarstellung der Inneneinrichtung des Transferdispensers nach Fig. 1 mit einer Ausführungsform einer (teilweise angeschnittenen) erfindungsgemäßen Rutschkupplung;
Fig. 3 eine schematische, teilweise geschnittene Ansicht einer erfindungsgemäßen Rutschkupplung gemäß einer anderen Ausführungsform;
Fig. 4 eine Darstellung ähnlich Fig. 3 einer nochmals anderen Ausführungsform einer erfindungsgemäßen Rutschkupplung;
Fig. 5 eine den Fig. 3 und 4 ähnliche Darstellung einer noch weiteren Ausführungsform einer erfindungsgemäßen Rutschkupplung, und
Fig. 6 eine den Darstellungen der Fig. 3 bis 5 ähnliche Darstellung einer nochmals anderen Ausführungsform einer erfindungsgemäßen Rutschkupplung.

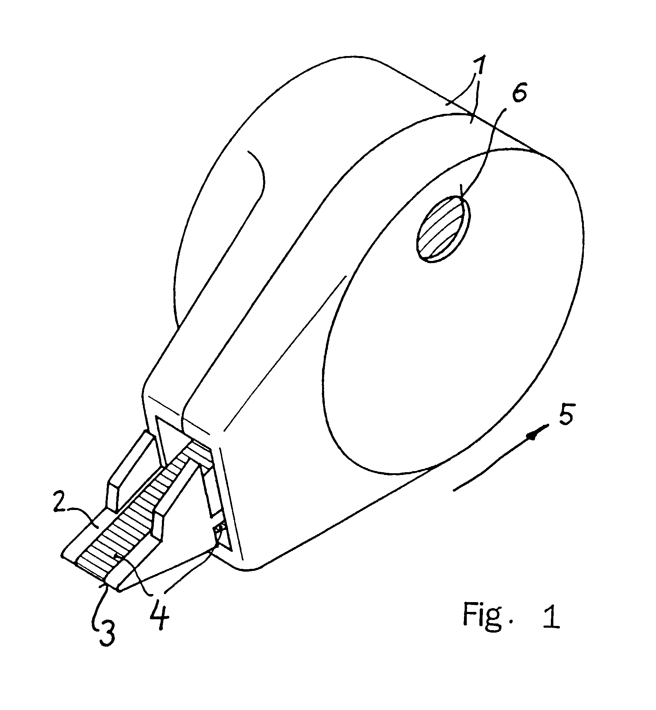

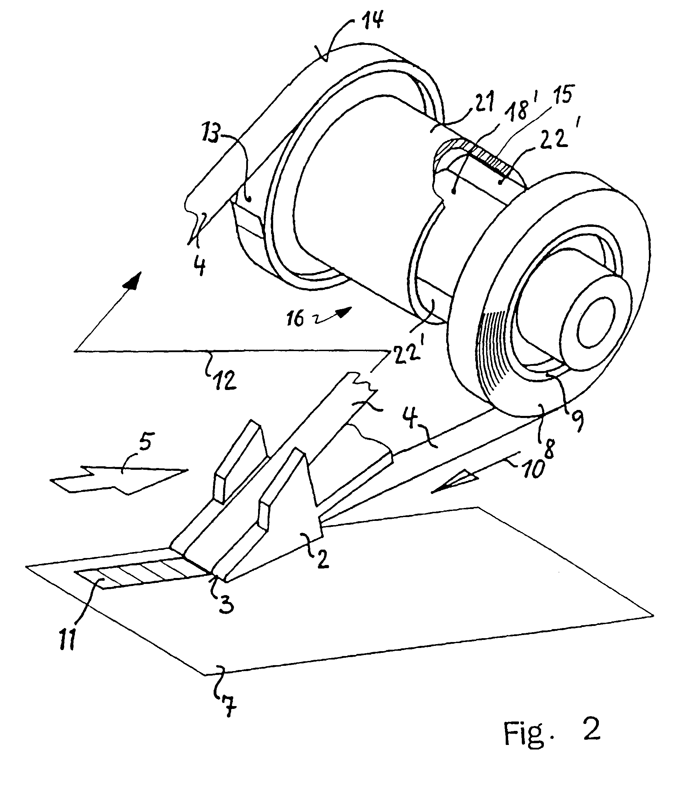

Der in den Fig. 1 und 2 gezeigte Transferdispenser weist ein Gehäuse 1 auf, das im wesentlichen als ein gedrungener Zylinder ausgebildet ist, von dem eine einseitige, sich im wesentlichen radial erstreckende Gehäuseverlängerung abgeht, die eine Durchtrittsöffnung aufweist, durch die sich ein nach außen ragendes Auftragelement 2 erstreckt, das mit seinem freien Ende eine Auftragleiste 3 ausbildet. Ein Trägerband 4 läuft aus dem Gehäuse 1 heraus, über die Unterseite des Auftragelementes 2 hinweg, wird an diesem in seiner Bewegungsrichtung stark nach oben abgelenkt und läuft schließlich über der Oberseite des Auftragelementes 2 wieder in das Gehäuse zurück, wenn dieses in Richtung des Pfeiles 5 (Fig. 1) mit der Auftragleiste 3 über ein Substrat 7 (Fig. 2) hinwegbewegt wird.

Wie aus Fig. 2 weiter ersichtlich ist, läuft das Trägerband 4 von einem Vorratswickel 8, der auf einem Vorratsspulenkern 9 sitzt, in Richtung des Pfeiles 10 zur Auftragleiste 3 des Auftragelementes 2 hin. Auf dem Trägerband 5 ist ein Klebstoffilm angebracht, der sich auf dem von dem Vorratswickel 8 ablaufenden Abschnitt des Trägerbandes 4 bei der Darstellung nach Fig. 2 auf dessen Unterseite befindet. Dadurch, daß das Gerät 1 mit der Auftragleiste 3 gegen das Substrat 7 angedrückt wird, wird in Verbindung mit der Richtungsumlenkung des Trägerbandes 4 der Klebstoffilm vom Trägerband 4 in Form eines Klebstoffauftrags 11 auf das Substrat übertragen. Der Füllstand des Vorratswickels 8 läßt sich durch das im Gehäuse 1 vorgesehene Füllstands-Schauloch 6 überprüfen.

Das auf der Oberseite des Auftragelements 2 wieder in das Gehäuse zurücklaufende Trägerband 4 wird dort, wie durch die prinzipielle Darstellung des Pfeiles 12 gezeigt, auf den Kern 13 einer Aufwickelspule unter Bildung eines Aufwickels 14 aufgewickelt.

Wie aus den Figuren erkennbar, ist der Außendurchmesser des Spulenkerns 13 der Aufwickelspule etwas größer als der Durchmesser eines neuen Vorratswickels 8, so daß durch die koaxiale Anordnung der Spulenkerne 9 und 13 der Vorrats- bzw. Aufwickelspule die stets gleich schnelle Umdrehung beider Spulenkerne 9 und 13 dazu führt, daß auf dem Außenumfang des Wickels 14 vom Trägerband 4 auf dem Spulenkern 13 der Aufwickelspule dort stets die Tendenz besteht, eine etwas größere Länge des Trägerbandes 4 als die Länge, die von dem Vorratswickel 8 abgegeben wird, aufzuwickeln. Um die hierdurch entstehenden Drehzahldifferenzen auszugleichen, steht der Spulenkern 13 der Aufwickelspule mit dem Spulenkern 9 der Vorratsspule über eine Rutschkupplung 16 in Antriebsverbindung.

In dieser Rutschkupplung 16 ist der Spulenkern 9 in einer geeigneten, in Fig. 2 nicht näher dargestellten Weise mit einem seitlich in Richtung auf die Aufwickelspule hin vorstehenden koaxialen Ringabsatz 18' versehen, der an seinem Außenumfang zwei zueinander um 180° versetzte, in seiner axialen Richtung verlaufende leistenförmige Erhebungen 22' trägt. Der seitlich vorstehende, im wesentlichen zylindrische Absatz 18' bildet in Verbindung mit den beiden vorspringenden Leisten 22' ein Formelement in Form eines starren, formstabilen Formkörpers, der ein Kupplungsteil darstellt.

Mit dem Spulenkern 13 der Aufwickelspule ist seinerseits in geeigneter Weise ein ebenfalls seitlicher, koaxialer, in Richtung auf die Vorratsspule hin vorspringender ringhülsenförmiger Absatz 21 verbunden, der seinerseits ein zweites Kupplungsteil ausbildet, in das der aus dem Ansatz 18' und den Formleisten 22' bestehende erste Kupplungsteil (Formelement) koaxial hineinragt. Dabei liegen die radial äußersten Begrenzungen der Formleisten 22' auf einem Durchmesser, der etwas größer ist als der Durchmesser des ringförmigen Kupplungsteiles 21 vor der Montage.

Das ringförmige Kupplungsteil 21 besteht seinerseits aus einem biegsamen Material, d.h. einem Material, das bei der Montage durch die Formleisten 22' von innen her radial nach außen etwas aufgebogen wird, ohne daß dabei allerdings die Länge des Außenumfangs bzw. Innenumfangs des ringförmigen Kupplungsteils 21 sich ändert. Schiebt man den Absatz 18' mit den Formleisten 22' in das ringförmige Kupplungsteil 21 seitlich koaxial hinein, wird letzteres, das vor der Montage im Querschnitt kreisringförmig war, durch die Formleisten 22' örtlich radial nach außen aufgebogen, so daß die Querschittsform nach der Montage nicht mehr kreisringförmig, sondern oval bzw. elliptisch ist. Als Material für das zylinderhülsenförmige Kupplungsteil 21 kann z.B. ein entsprechender Karton oder auch ein geeigneter Kunststoff eingesetzt werden, der die erforderliche Verbiegbarkeit aufweist.

Wenn bei der in Fig. 2 dargestellten Form der Rutschkupplung 16 nun durch das vom Vorratswickel 8 abgezogene Trägerband 4 bei der Benutzung des Gerätes der Spulenkern 9 der Vorratsspule gedreht wird, spannt sich zunächst das Trägerband 4 zwischen den beiden Spulen. Ist eine vorgegebene Spannung des Trägerbandes 4 erreicht, wird das Rutschmoment in der Rutschkupplung 16 überschritten, was eine Relativbewegung zwischen dem aus den Teilen 18' und 22' bestehenden Formelement einerseits und dem zweiten Kupplungsteil in Form der ringförmigen Hülse 21 andererseits nach sich zieht. Diese Relativbewegung zwischen den beiden Kupplungsteilen erfolgt unter einer ständigen Verformung der zylindrischen Hülse 21 durch die Formleisten 22'. Die dabei aufgebrachte Verformungsarbeit führt in Verbindung mit den ebenfalls an den Anlagestellen 15 auftretenden Reibkräften zu einem Energieverlust, der ein Bremsmoment zwischen den beiden relativ zueinander bewegten Kupplungsteilen ausbildet.

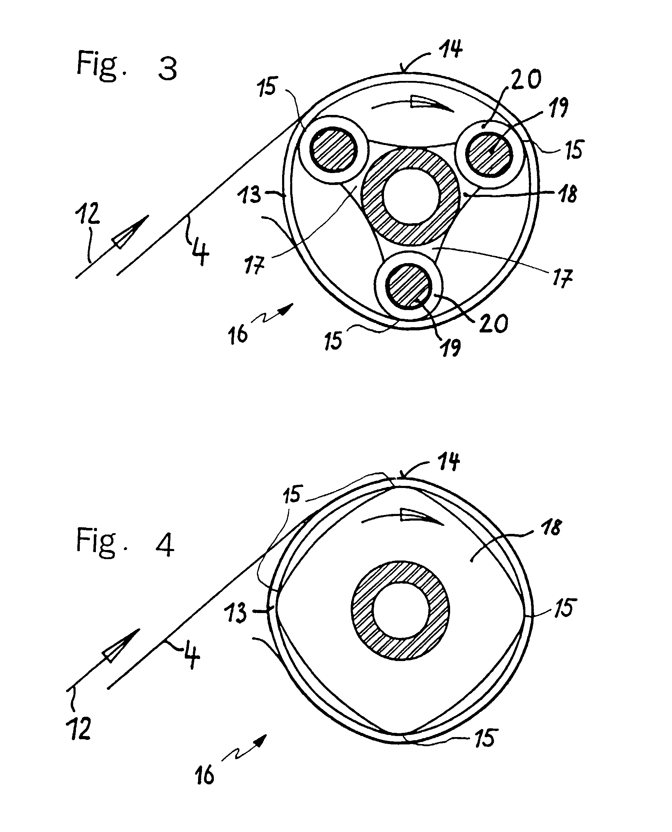

Andere Gestaltungeformen für die Rutschkupplung 16 sind in den Fig. 3 bis 6 gezeigt, wobei jeweils ein Radialschnitt durch die aus den beiden Kupplungsteilen gebildete Kupplung 16 dargestellt ist.

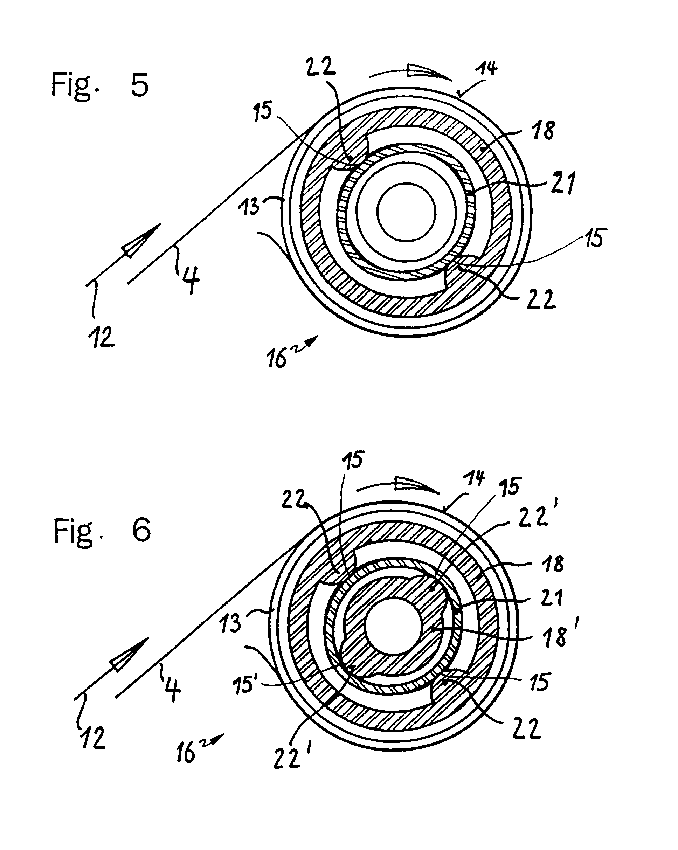

Bei den in den Fig. 3 und 4 gezeigten Ausführungsformen ist das als Formkörper ausgebildete zweite Kupplungsteil jeweils koaxial im ersten ringförmigen Kupplungsteil 13 angeordnet, während bei den Ausführungsformen der Fig. 5 und 6 die Anordnung umgekehrt ist.

Bei der Darstellung nach Fig. 3 besteht der Formkörper 18 aus einem sternförmig angeordneten Trägerkranz mit radial nach außen weisenden Tragarmen 17, die an ihren radial äußeren Enden frei um Drehbolzen 19 verdrehbare Rollen 20 aufweisen. Dabei werden die Anlagestellen 15 zwischen dem Formkörper 18 und dem ersten ringförmigen Kupplungsteil 13 durch die Berührstellen zwischen den Rollen 20 und dem Innenumfang des ringförmigen Kupplungsteiles 13 geschaffen.

Die Darstellungen der Fig. 3 und 4 zeigen Ausführungsformen der Rutschkupplung 16, bei denen der Spulenkern 13 der Aufwickelspule seinerseits bereits das ringförmige erste Kupplungsteil ausbildet. Gleichermaßen könnte dieses jedoch auch als ein seitlich am Spulenkern 13 in geeigneter Form angebrachter Fortsatz (mit zum Spulenkern 13 z.B. unterschiedlichem Durchmesser) sein, etwa in der Form, wie dies in Fig. 2 gezeigt ist.

Die Darstellung der Fig. 4 unterscheidet sich von der der Fig. 3 nur dadurch, daß hier als Formelement 18 ein Drehteil eingesetzt ist, das im Querschnitt im wesentlichen polygonförmig, hier: quadratisch mit leicht nach außen gewölbten Seitenlängen, ausgebildet ist, wobei die Polygonecken abgerundet sind und gegen das ringförmige erste Kupplungsteil 13 über die Anlagestellen 15 anliegen. Dabei ist wiederum der Kreis, auf dem die abgerundeten Polygonecken liegen, etwas größer als der Kreis, den im nicht-zusammengebauten Zustand der Querschnitt des ringförmigen Kupplungsteiles 13 ausbildet.

Bei den Darstellungen der Fig. 5 und 6 ist der Spulenkern der Aufwickelspule 13 mit dem Formelement 18 verbunden, das im wesentlichen die Form einer Ringhülse hat, die an ihrem Innenumfang zwei nach innen hin vorspringende, sich in Axialrichtung des Teiles 18 erstreckende Formleisten 22 (ähnlich den Formleisten 22' aus Fig. 2, jedoch hier radial nach innen gerichtet) aufweist. Mit diesen Formleisten 22 stützt sich das Formelement 18 auf dem in seinem Inneren angeordneten hülsenförmigen Kupplungsteil 21 ab, das (in Fig. 5 nicht gezeigt) mit dem (ebenfalls in Fig. 5 nicht dargestellten) Spulenkern der Aufwickelspule in geeigneter Weise verbunden ist. Hier wird bei einer Relativbewegung zwischen dem Formteil 18 und dem Kupplungsteil 21 letzteres radial von außen her nach innen deformiert, da der Kreis, auf dem die radial innersten Stellen der Formleisten 22 liegen, einen etwas kleineren Durchmesser hat als der Außenumfang des ringförmigen Kupplungsteils 21 in dessen unbelastetem Zustand vor dem Einschieben in das Innere des Formelementes 18.

Die Darstellung der Fig. 6 unterscheidet sich von der der Fig. 5 nur dadurch, daß hier innerhalb der ringförmigen Hülse 21 nochmals ein zweites Formteil 18' angebracht ist, das aus einem im wesentlichen zylindrischen Körper besteht, der an seinem Außenumfang, wie bei dem Formteil 18' in Fig. 2, mit in axialer Richtung verlaufenden, nach außen gerichteten Formleisten 22' versehen ist. Diese bilden mit dem Innenumfang der Ringhülse 21 Kontaktstellen 15' aus, die zu den Kontaktstellen 15 zwischen dem Formelement 18 und der Ringhülse 21 radial versetzt sind und zwar derart, daß der Versatz jeweils die Hälfte des Winkels beträgt, der zwischen zwei aufeinander folgenden Formleisten ausgebildet ist, d.h. in Fig. 6 liegt ein Versatz von 90° vor. In diesem Fall ist nicht die Ringhülse 21, sondern das zweite Formteil 18' mit dem Spulenkern der Aufwickelspule verbunden und die Ringhülse 21 stellt hier nur innerhalb der Rutschkupplung 16 eine elastische Abstützung zwischen den beiden formfesten Formteilen 18 und 18' dar.

Die Anzahl der Kontaktstellen 15 bzw. der radialen Vorsprünge 22 bzw. 22' kann auch anders als bei den in den Figuren gezeigten Ausführungsformen sein, bei denen zwei Anlagestellen 15 (Fig. 5 bzw. 6), drei Anlagestellen 15 (Fig. 3) und vier Anlagestellen 15 (Fig. 4) gezeigt sind. Es ist aber ohne weiteres auch möglich, eine andere Anzahl von Anlagestellen vorzusehen.

Nur der Vollständigkeit halber sei erwähnt, daß die Rutschkupplung 16, wie sie in den Figuren gezeigt ist, auch gleichermaßen so eingesetzt werden könnte, daß z.B. das Formelement 18 an einer Seitenwand des Gerätes 1 starr befestigt ist und der Spulenkern 13 den Kern einer Vorratsspule darstellt, die z.B. ein Klebeband trägt, das vom Benutzer etwa zu Verpackungszwecken abgezogen werden kann. Dann bildet das Ganze eine Rutschkupplung im Sinne des Aufbringens eines Bremsmomentes auf eine ansonsten frei verdrehbare Vorratsspule. Selbstverständlich könnte auch umgekehrt die frei verdrehbare Spule mit dem starren Formelement 18 gekoppelt sein, während vom Gehäuse die verformbare Ringhülse 13 vorsteht.

## Patentansprüche

1. Rutschkupplung zur drehmomentbegrenzenden Kraftübertragung zwischen einem Spulenkern (9) einer Spule zum Auf- oder Abwickeln eines Bandes (4) und einer Drehaufnahme für diesen Spulenkern (9), mit einem im Querschnitt ringförmigen ersten Kupplungsteil (13; 21) und einem als Formelement (18, 18') ausgebildeten zweiten Kupplungsteil, wobei das ringförmige Kupplungsteil (13; 21) an mehreren über seinen Umfang verteilt liegenden, voneinander beabstandeten Anlagestellen (15, 15') mit zugeordneten, am Formelement (18, 18') ausgebildeten Kontaktflächenbereichen in reibschlüssigem Eingriff steht, und wobei eines der beiden Kupplungsteile (13, 18; 21, 18') mit dem Spulenkern (9) der Spule verbunden ist, während das andere Kupplungsteil (18, 18'; 13) Bestandteil der Drehaufnahme ist, **dadurch gekennzeichnet**, daß das Formelement (18; 18') als starr-formstabiler Formkörper ausgebildet ist, während das ringförmige erste Kupplungsteil (13; 21) aus biegsamem Material besteht, und daß das Formelement (18; 18') bei Auftreten einer Relativbewegung zwischen beiden Kupplungsteilen (13, 21, 18, 18') das ringförmige Kupplungsteil (13; 21) über die Anlagestellen (15; 15') umlaufend verformt.

2. Rutschkupplung nach Anspruch 1, dadurch gekennzeichnet, daß das ringförmige Kupplungsteil (13; 21) einen kreisförmigen Querschnitt aufweist, der nach dem Zusammenstecken beider Kupplungsteile (13, 18; 18', 21) vom Formelement (18, 18') unrund verformt wird.

3. Rutschkupplung nach Anspruch 1 oder 2, dadurch gekennzeichnet, daß das ringförmige Kupplungsteil als eine zylindrische Hülse (13; 21) ausgebildet ist.

4. Rutschkupplung nach einem der Ansprüche 1 bis 3, dadurch gekennzeichnet, daß das Formelement (18; 18') koaxial innerhalb des ringförmigen Kupplungsteiles (13; 21) angeordnet ist.

5. Rutschkupplung nach Anspruch 4, dadurch gekennzeichnet, daß das Formelement als ein im wesentlichen zylindrischer Körper (18') ausgebildet ist, der auf seinem Außenumfang mindestens zwei axial verlaufende, gegen den Innenumfang des ringförmigen Kupplungsteile (21) vorspringende, abgerundete und die Anlagestellen (15') bildende Formvorsprünge (22') aufweist.

6. Rutschkupplung nach Anspruch 4, dadurch gekennzeichnet, daß das Formelement aus einem im Querschnitt im wesentlichen polygonförmigen Drehteil (18) gebildet wird, dessen Ecken abgerundet sind und die mit dem ringförmigen Kupplungsteil (13) in Anlagekontakt stehenden Anlagestellen (15) bilden.

7. Rutschkupplung nach Anspruch 4, dadurch gekennzeichnet, daß das Formelement aus einem drehbaren Radkranz (18) besteht, der Trägerarme (17) aufweist, an deren Ende frei verdrehbare Rollen (20) angeordnet sind, welche die mit dem ringförmigen Kupplungsteil (13) in Anlagekontakt stehenden Anlagestellen (15) bilden.

8. Rutschkupplung nach einem der Ansprüche 1 bis 7, dadurch gekennzeichnet, daß die Anlagestellen (15; 15') gleichmäßig über den Umfang des ringförmigen Kupplungsteiles (13; 21) verteilt sind.

9. Rutschkupplung nach einem der Ansprüche 1 bis 3, 7 oder 8, dadurch gekennzeichnet, daß das ringförmige Kupplungsteil (21) koaxial innerhalb des Formelementes (18) angebracht ist.

10. Rutschkupplung nach Anspruch 9, dadurch gekennzeichnet, daß das Formelement als eine im wesentlichen zylindrisches Ringhülse (18) ausgebildet ist, die an ihrem Innenumfang mindestens zwei in ihrer Längsrichtung verlaufende, gegen den Außenumfang des ringförmigen Kupplungsteiles (21) vorspringende, mit diesem in Anlagekontakt stehende, an ihren freien Enden abgerundete Formvorsprünge (22) aufweist.

11. Rutschkupplung nach Anspruch 10, dadurch gekennzeichnet, daß innerhalb des ringförmigen Kupplungsteiles (21) koaxial ein weiteres starr-formstabiles Formelement (18') angeordnet ist, das seinerseits über mindestens zwei an seinem Umfang verteilt angeordnete Formvorsprünge mit dem Innenumfang des ringförmigen Kupplungsteiles (21) an Anlagestellen (15') derart in Anlagekontakt steht, daß es bei Auftreten einer Relativbewegung zwischen ihm und dem ringförmigen Kupplungsteil (21) dieses über die Anlagestellen (15') radial nach außen verformt, wobei alle Anlagestellen (15') zu denen (15) zwischen dem ringförmigen Kupplungsteil (21) und dem anderen Formteil (18) in Umfangsrichtung jeweils versetzt sind, und wobei das eine Formelement (18) mit dem Spulenkern (9) der Spule und das weitere Formelement (18') mit dem Spulenkern (13) einer weiteren Spule verbunden ist.

12. Rutschkupplung nach einem der Ansprüche 1 bis 10, dadurch gekennzeichnet, daß das ringförmige Kupplungsteil (13; 21) mit dem Spulenkern (9) der Spule und das Formelement (18; 18') mit dem Spulenkern (13) einer anderen Spule verbunden ist.

13. Rutschkupplung nach Anspruch 12, dadurch gekennzeichnet, daß zwischen dem einen und/oder dem anderen Kupplungsteil (13; 13'; 18; 18') und dem zugeordneten Spulenkern ein Übersetzungsgetriebe zwischengeschaltet ist.

14. Rutschkupplung nach Anspruch 12 oder 13, wobei eine der beiden Spulen die andere über die Rutschkupplung (16) antreibt, dadurch gekennzeichnet, daß das Formelement (18; 18') an den Spulenkern (9) der antreibenden Spule angeschlossen ist.

15. Rutschkupplung nach Anspruch 14, dadurch gekennzeichnet, daß das ringförmige Kupplungsteil (13; 21) der Spulenkern der angetriebenen Spule ist.

16. Rutschkupplung nach einem der Ansprüche 1 bis 15, dadurch gekennzeichnet, daß das ringförmige Kupplungsteil (13; 21) aus Karton oder aus biegeverformbarem Kunststoff besteht.

## Revendications

1. Accouplement à friction pour assurer un transfert de force, limitant le moment de rotation, entre un noyau (9) d'une bobine d'enroulement ou de déroulement d'une bande (4) et un support rotatif pour ce noyau de bobine (9), comportant une première pièce d'accouplement (13; 21) de section annulaire et une deuxième pièce d'accouplement construite comme élément moulé (18, 18'), la pièce d'accouplement annulaire (13; 21) se trouvant en plusieurs points de contact (15, 15'), répartis à sa périphérie, écartés l'un de l'autre, en coopération mécanique de frottement avec des zones de surfaces de contact correspondantes formées sur l'élément moulé (18, 18'), et une des deux pièces d'accouplement (13, 18; 21, 18') étant reliée au noyau de bobine (9), tandis que l'autre pièce d'accouplement (18, 18', 13) fait partie du support rotatif, caractérisé en ce que l'élément moulé (18, 18') est conçu comme corps moulé rigide indéformable, tandis que la première pièce d'accouplement annulaire (13; 21) est faite dans un matériau flexible et en ce que, en cas d'apparition d'un mouvement relatif entre les deux pièces d'accouplement (13, 21, 18, 18'), l'élément moulé (18, 18') déforme la pièce d'accouplement annulaire (13; 21) à sa périphérie par l'intermédiaire des points de contact (15; 15').

2. Accouplement à friction suivant la revendication 1, caractérisé en ce que la pièce d'accouplement annulaire (13; 21) présente une section circulaire qui est déformée de manière ovale par l'élément moulé (18, 18') après assemblage des deux pièces d'accouplement (13, 21, 18, 18').

3. Accouplement à friction suivant la revendication 1 ou 2, caractérisé en ce que la pièce d'accouplement annulaire est conçue comme douille cylindrique (13; 21).

4. Accouplement à friction suivant l'une des revendications 1 à 3, caractérisé en ce que l'élément moulé (18, 18') est disposé de manière coaxiale à l'intérieur de la pièce d'accouplement annulaire (13; 21).

5. Accouplement à friction suivant la revendication 4, caractérisé en ce que l'élément moulé est conçu comme corps essentiellement cylindrique (18') qui présente à sa périphérie extérieure au moins deux saillies moulées (22') arrondies s'étendant en direction axiale, qui font saillie contre la périphérie intérieure de la pièce d'accouplement annulaire (21) et forment les points de contact (15').

6. Accouplement à friction suivant la revendication 4, caractérisé en ce que l'élément moulé est fait d'une pièce tournée de section essentiellement polygonale (18), dont les coins sont arrondis et forment les points de contact (15) se trouvant en contact d'appui avec la pièce d'accouplement annulaire (13).

7. Accouplement à friction suivant la revendication 4, caractérisé en ce que l'élément moulé est formé d'une couronne tournante (18) qui présente des bras de support (17), aux extrémités desquels sont disposés des galets à rotation libre (20), qui constituent les points de contact (15) en contact d'appui avec la pièce d'accouplement annulaire (13).

8. Accouplement à friction suivant l'une des revendications 1 à 7, caractérisé en ce que les points de contact (15; 15') sont répartis régulièrement à la périphérie de la pièce d'accouplement annulaire (13; 21).

9. Accouplement à friction suivant l'une des revendications 1 à 3, 7 ou 8, caractérisé en ce que la pièce d'accouplement annulaire (21) est disposée de manière coaxiale à l'intérieur de l'élément moulé (18).

10. Accouplement à friction suivant la revendication 9, caractérisé en ce que l'élément moulé est conçu comme une douille annulaire essentiellement cylindrique (18), qui présente à sa périphérie intérieure au moins deux saillies moulées (22) s'étendant dans sa direction longitudinale, faisant saillie contre la périphérie extérieure de la pièce d'accouplement annulaire (21), se trouvant en contact d'appui avec celle-ci et arrondies à leur extrémité libre.

11. Accouplement à friction suivant la revendication 10, caractérisé en ce qu'un élément moulé supplémentaire (18'), rigide indéformable, est disposé de manière coaxiale à l'intérieur de la pièce d'accouplement annulaire (21), lequel est à son tour de telle manière en contact d'appui avec la périphérie intérieure de la pièce d'accouplement annulaire (21) en des points de contact (15') à l'aide d'au moins deux saillies moulées réparties à sa périphérie que, lors de l'apparition d'un mouvement relatif entre celui-ci et la pièce d'accouplement annulaire (21), cette dernière est déformée radialement vers l'extérieur via les points de contact (15'), tous les points de contact (15') étant décalés le long de la périphérie par rapport aux points de contact (15) existant entre la pièce d'accouplement annulaire (21) et l'autre élément moulé (18), et l'élément moulé (18) étant relié au noyau de bobine (9) de la bobine et l'autre élément moulé (18') étant relié au noyau de bobine (13) d'une autre bobine.

12. Accouplement à friction suivant l'une des revendications 1 à 10, caractérisé en ce que la pièce d'accouplement annulaire (13; 21) est reliée au noyau de bobine (9) de la bobine et l'élément moulé (18; 18') au noyau de bobine (13) d'une autre bobine.

13. Accouplement à friction suivant la revendication 12, caractérisé en ce qu'un engrenage multiplicateur est intercalé entre l'une et/ou l'autre pièce d'accouplement (13, 21, 18, 18') et le noyau de bobine correspondant.

14. Accouplement à friction suivant la revendication 12 ou 13, une des deux bobines entraînant l'autre via l'accouplement à friction (16), caractérisé en ce que l'élément moulé (18; 18') est relié au noyau de bobine (9) de la bobine motrice.

15. Accouplement à friction suivant la revendication 14, caractérisé en ce que la pièce d'accouplement annulaire (13; 21) est le noyau de bobine de la bobine entraînée.

16. Accouplement à friction suivant l'une des revendications 1 à 15, caractérisé en ce que la pièce d'accouplement annulaire (13; 21) est fabriquée en carton ou en matière plastique flexible.

## Claims

1. A slipping dutch for the torque-limiting transmission of force between a spool core (9) of a spool for the winding and unwinding of a tape (4) and a rotary support for said spool core (9), comprising a first clutch part (13;21) of annular cross-section and a second clutch part in the form of a shaped element (18,18'), the annular clutch part (13;21) engaging by friction at several contact points (15,15') spaced apart from one another around its circumference with associated contact surface zones formed on the shaped element (18,18') and one of the two clutch parts (13,18;21,18') being connected to the spool core (9) of the spool and the other clutch part (18,18';13) forming part of the rotary support, characterized in that the shaped element (18;18') is a rigid dimensionally stable moulding while the annular first dutch part (13;21) consists of a flexible material and in that, in the event of relative movement between the two dutch parts (13,21,18,18'), the shaped element (18;18') deforms the annular clutch part (13;21) all round via the contact points (15;15').

2. A slipping clutch as claimed in claim 1, characterized in that the annular clutch part (13;21) has a circular cross-section which, after the two dutch parts (13,18;18',21) have been fitted together, is deformed into a non-circular cross-section.

3. A slipping clutch as claimed in claim 1 or 2, characterized in that the annular clutch part is in the form of a cylindrical sleeve (13;21).

4. A slipping clutch as claimed in any of claims 1 to 3, characterized in that the shaped element (18;18') is arranged coaxially inside the annular clutch part (13;21).

5. A slipping clutch as claimed in claim 4, characterized in that the shaped element is formed by a substantially cylindrical moulding (18') which is formed on its outer circumference with at least two axially extending, rounded projections (22') which project towards the inner circumference of the annular clutch part (21) and which form the contact points (15').

6. A slipping clutch as claimed in claim 4, characterized in that the shaped element is formed by a rotary part (18) of substantially polygonal cross-section of which the corners are rounded and, with the annular clutch part (13), form the contact points (15) in pressure contact.

7. A slipping clutch as claimed in claim 4, characterized in that the shaped element consists of a rotatable wheel rim (18) with carrier arms (17) at the ends of which are mounted freely rotatable rollers (20) that form the contact points (15) in contact with the annular clutch part (13).

8. A slipping clutch as claimed in any of claims 1 to 7, characterized in that the contact points (15;15') are uniformly distributed over the circumference of the annular clutch part (13;21).

9. A slipping clutch as claimed in any of claims 1 to 3, 7 and 8, characterized in that the annular clutch part (21) is disposed coaxially inside the shaped element (18).

10. A slipping clutch as claimed in claim 9, characterized in that the shaped element is preferably formed by a substantially cylindrical annular sleeve (18) formed on its inner circumference with at least two projections (22) which are rounded at their free ends and which extend longitudinally of the sleeve, projecting towards and being in pressure contact with the outer circumference of the annular clutch part (21)

11. A slipping dutch as claimed in claim 10, characterized in that another rigid and dimensionally stable shaped element (18') is coaxially disposed inside the annular clutch part (21) and, through at least two projections distributed over its circumference, is in contact with the inner circumference of the annular clutch part (21) at contact points (15') in such a way that, in the event of a relative movement between the second shaped element and the annular clutch part (21), the second shaped element deforms the annular clutch part radially outwards via the contact points (15'), all the contact points (15') being peripherally offset in relation to those (15) between the annular clutch part (21) and the other shaped element (18) and one shaped element (18) being connected to the spool core (9) of the spool and the other shaped element (18') being connected to the spool core (13) of another spool.

12. A slipping dutch as claimed in any of claims 1 to 10, characterized in that the annular clutch part (13;21) is connected to the spool core (9) of the spool while the shaped element (18;18') is connected to the spool core (13) of another spool.

13. A slipping clutch as claimed in claim 12, characterized in that a transmission gear is provided between one and/or the other clutch part (13;13';18;18') and the associated spool core.

14. A slipping clutch as claimed in claim 12 or 13, one of the two spools driving the other via the slipping dutch (16), characterized in that the shaped element (18;18') is connected to the spool core (9) of the driving spool.

15. A slipping clutch as claimed in claim 14, characterized in that the annular clutch part (13;21) is the spool core of the driven spool.

16. A slipping dutch as claimed in any of claims 1 to 15, characterized in that the annular clutch part (13;21) is made of paperboard or flexurally deformable plastic.
